Europäisches Patentamt

European Patent Office

Office européen des brevets

(19)

(11) Publication number: **0 172 256**
**A1**

(12)

# EUROPEAN PATENT APPLICATION
published in accordance with Art. 158(3) EPC

(21) Application number: 85901063.9

(22) Date of filing: 20.02.85

Data of the international application taken as a basis:

(86) International application number:
PCT/JP85/00068

(87) International publication number.
WO85/03663 (29.08.85 85/19)

(51) Int. Cl.⁴: **B 25 J 9/10**
**B 25 J 9/16, B 25 J 13/00**
**G 05 B 19/18**

(30) Priority: 20.02.84 JP 298/84

(43) Date of publication of application:
26.02.86 Bulletin 86/9

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: NAKASHIMA, Seiichiro
3-2, Hinohon-cho 5-chome
Hino-shi Tokyo 191(JP)

(72) Inventor: TOYODA, Kenichi
17-25, Shinmei 1-chome
Hino-shi Tokyo 191(JP)

(72) Inventor: TORII, Nobutoshi
Fuyou-Haitsu 308 65-4, Takakura-cho
Hachioji-shi Tokyo 192(JP)

(72) Inventor: NIHEI, Ryo
Mezonrira 202 34-7, Kichijojihon-cho 1-chome
Musashino-shi Tokyo 180(JP)

(74) Representative: Billington, Lawrence Emlyn et al,
HASELTINE LAKE & CO Hazlitt House 28 Southampton
Buildings Chancery Lane
London WC2A 1AT(GB)

(54) SYSTEM FOR RETURNING TO ORIGIN FOR AN ARTICULATED ROBOT.

(57) A system for returning to origin for an articulated robot
(39) having a plurality of operation axes that are controlled
by a numerical control unit (NC). Being designated by the
mode for returning to origin, the numerical control unit (NC)
enables the plurality of operation axes of the articulated
robot (39) to operate independently of each other based
upon a program for returning to origin, and drives at least
two axes among many operation axes, i.e., preferably drives
an operation axis (U) that actuates the upper arm and drives
an operation axis (W) that actuates the lower arm, so that
they move toward the origin, simultaneously.

./...

EP 0 172 256 A1

# Fig.7

0172256

## DESCRIPTION

ZERO POINT RETURN SYSTEM OF ARTICULATED ROBOT

## Technical Field

This invention relates to an industrial robot and, more particularly, to a zero point return system for restoring an articulated robot to a reference position at the start of operation.

## Background Art

Industrial robots having various operating configurations have been developed, among which are polar coordinate system-type robots and articulated robots. Among these, the most widespread are articulated robots employed widely in arc welding and having five or six controlled axes, wherein link mechanisms are arranged to form an arm drive system. For example, an articulated robot configuration having six controlled axes includes an axis for arm sweep (0 axis), an axis for back-and-forth swiveling of a lower arm (W axis), an axis for up-and-down swiveling of an upper arm (U axis), and axes for rotating, bending and twisting a wrist ($\alpha$, $\beta$ and $\gamma$ axes, respectively).

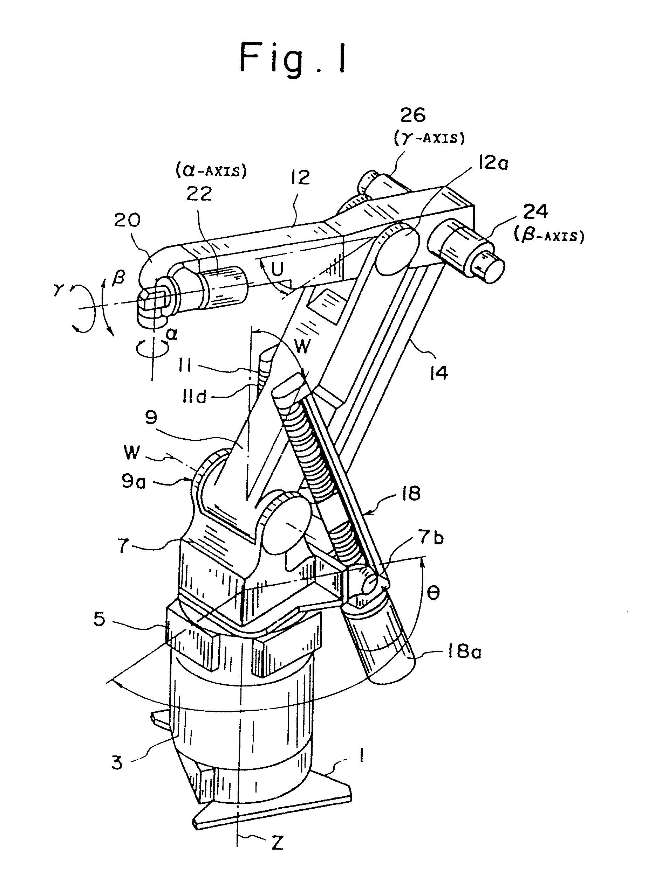

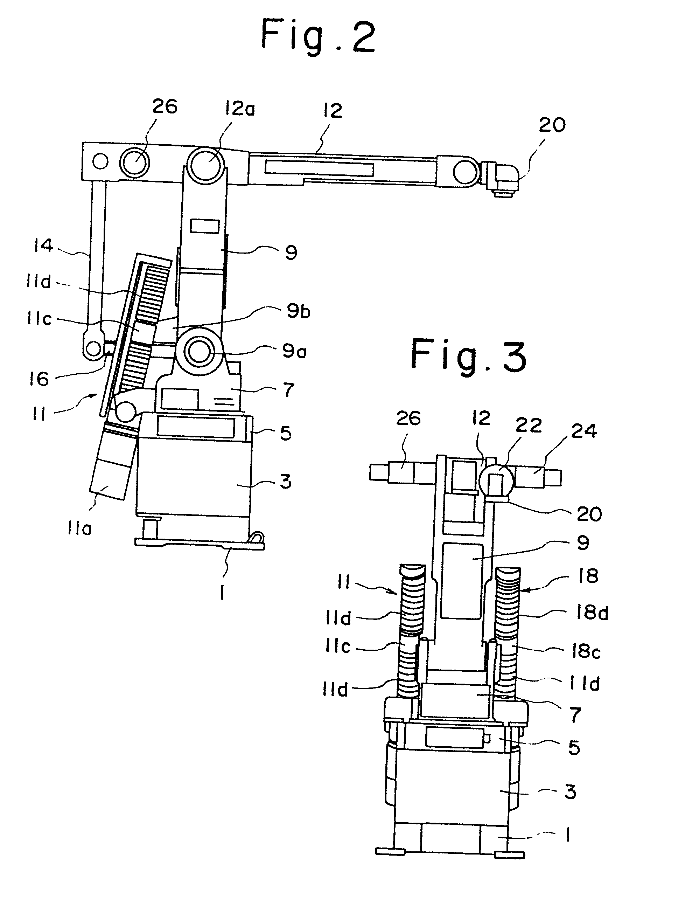

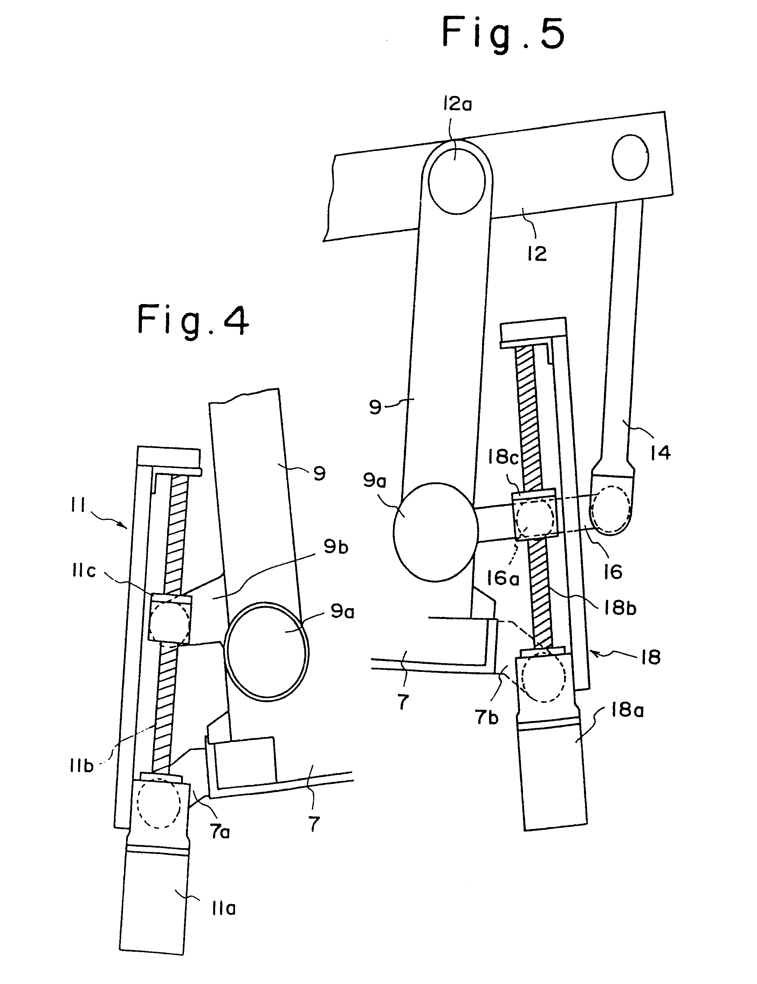

An articulated robot having six controlled axes will now be described with reference to Figs. 1 through 5. Fig. 1 is a perspective view of an articulated robot having six controlled axes, Fig. 2 is a side view of the same, Fig. 3 is a front view of the same, Fig. 4 is a partially enlarged view showing a lower arm drive mechanism, and Fig. 5 is a partially enlarged view showing an upper arm drive mechanism. Numeral 1 denotes a base supporting the articulated robot. Mounted on the base 1 is a θ-axis servomotor 3 for rotating the robot members about a vertical axis (Z axis). The θ-axis servomotor is provided with a θ-axis unit 5, which is rotated by the θ-axis servomotor 3. Fixedly provided on the θ unit 5 is a W-axis unit 7 on which a lower arm (W-axis arm) 9 is axially supported by an arm shaft 9a, the lower arm being freely rotatable. Numeral 11 denotes a W-axis drive mechanism. As shown in detail in Fig. 4, the W-axis drive mechanism comprises a W-axis servomotor 11a, a W-axis ball screw 11b rotated by the servomotor 11a, and a W-axis nut 11c threadedly engaged with the screw 11b. The W-axis servomotor 11a is axially supported for free rotation on a support portion 7a extending from the W-axis unit 7. The W-axis nut 11c threadedly engaged with the W-axis ball screw 11b rotated by the W-axis servomotor 11a is rotatably supported on a support portion 9b provided on the W-axis arm 9. In Figs. 1 and 3, numeral 11d denotes a bellows-shaped dust cover protecting the W-axis ball screw from dust.

A upper arm (U-axis arm) 12 is rotatably supported at the end of the W-axis arm 9 by a drive 12a. As clearly shown in Fig. 5, the upper end of a U-axis intermediate link 14 is rotatably supported on the rear end of the U-axis shaft 12. One end of a U-axis lower link 16 is rotatably supported on the W-axis drive shaft 9a. The other end of the U-axis lower link 16 and the lower end of the U-axis intermediate link 14 are rotatably connected to each other. The W-axis arm 9 and the U-axis intermediate link 14 are arranged in parallel and form a parallel link mechanism.

Numeral 18 denotes a U-axis drive mechanism. As shown in detail in Fig. 5, the U-axis drive mechanism comprises a U-axis servomotor 18a, a U-axis ball screw 18b rotated by the servomotor 18a, and a U-axis nut 18c threadedly engaged with the ball screw 18b. The U-axis servomotor 18a is rotatably supported on a support portion 7b extending from the W-axis unit 7. The U-axis nut 18c threadedly engaged with the U-axis ball screw 18b rotated by the U-axis servomotor 18a is rotatably supported on a support portion 16a provided on an intermediate part of the U-axis lower link 16. In Figs. 1 through 3, numeral 18d denotes a bellows-shaped dust cover protecting the W-axis ball screw from dust. The end of the U-axis arm 12 is provided with a wrist mechanism 20, which is rotated by the $\alpha$-axis servomotor 22, bent up and down by the $\beta$-axis servomotor 24, and twisted by the $\gamma$-axis servomotor 16. The structure and operation of the wrist mechanism are well-known and a detailed description thereof is omitted. It should be noted that the $\theta$-axis unit 5, W-axis drive mechanism 11, U-axis drive mechanism 18, $\alpha$-axis servomotor 22, $\beta$-axis servomotor 24 and $\gamma$-axis servomotor 26 are each provided with a stroke limit switch SLS for deciding the maximum/minimum stroke thereof, and with an overtravel switch OTS on the outer side of the stroke limit switch for limiting the maximum possible angle of motion. Further, the ⍺-axis servomotor 22, β-axis servomotor 24 and ꝭ-axis servomotor 26 are each provided with a neutral switch NBTS.

In an articulated robot constructed as set forth above, the axes are controlled independently of one another. For example, the robot is so arranged that, when the swiveling W-axis arm 9 is swiveled about the W axis, the U-axis arm 12 provided on the end of the W-axis arm 9 and the wrist mechanism 20 do not change their respective angles of inclination with respect to the horizontal.

Further, a maximum possible angle of motion and a maximum/minimum stroke which defines the possible range of motion inside the maximum possible angle of motion are decided for each axis. When the maximum/minimum stroke is reached at the teaching of motions other than a zero point returning motion and at playback, the stroke limit switch SLS is turned on to automatically decelerate and stop each axis so that overtravel does not occur. If by any chance the maximum possible angle of motion is reached owing to, say, a failure on the corresponding axis, the overtravel switch OTS is turned on and the articulated robot is brought to an emergency stop.

At the start of operation, it is required that each member of the articulated robot first be set to a reference position (zero point) after the introduction of power. To this end, a zero point return operation must be performed for each axis. The zero point return operation is carried out in a sequence which depends upon the independence of the axis arrangement.

When the zero point restoring operation is executed, first the W axis is rotated toward the zero point to move the W-axis arm 9 to the zero point. At this time, the other axes, e.g., the U-axis arm rotated by the U axis, are controlled in such a manner that the angle with respect to the horizontal does not change. Consequently, depending upon the position of the U-axis arm 12, the U axis overtravels during the zero point restoring motion of the W axis. The disadvantageous result is that the articulated robot is brought to an emergency stop.

Accordingly, when performing the zero point return operation with the conventional articulated robot, a troublesome operation is performed in which the robot is first placed in a manual jog feed mode and each axis is moved manually near its respective zero point, after which the zero point restoring motion is carried out.

Further, since each axis is returned to its respective zero point in succession in the conventional arrangement, restoration to the zero point requires a long period of time.

## Disclosure of the Invention

The present invention has been devised to solve the aforementioned problems encountered in the zero point return system of an articulated robot. An object· of the present invention is to provide an zero point return system of an articulated robot wherein a zero point return operation is made possible irrespective of the position of the axes of motion of the articulated robot, and wherein the zero point return operation can be performed in a rapid manner.

According to the present invention, there is provided a zero point return system of an articulated robot having a plurality of axes of motion controlled by a numerical control unit. The numerical control unit has at least a memory storing a program for zero point return and a controller for executing processing on the basis of the program. By designating the zero point return mode, the plural axes of motion of the articulated robot are made operable independently, and at least two of these plural axes of motion are driven in the zero point direction simultaneously and are restored to the zero point.

By providing the present invention, the plural axes of motion of the articulated robot are made operable independently by designation of the zero point return mode, and the zero point return operation can be performed without the axes overtraveling, irrespective of the positions of the axes constituting the articulated robot. Moreover, according to the present invention, at least two axes which undergo the zero point return operation are driven in the zero point simultaneously, so that the zero point return operation can be performed more rapidly than in the prior art.

Brief Description of the Drawings

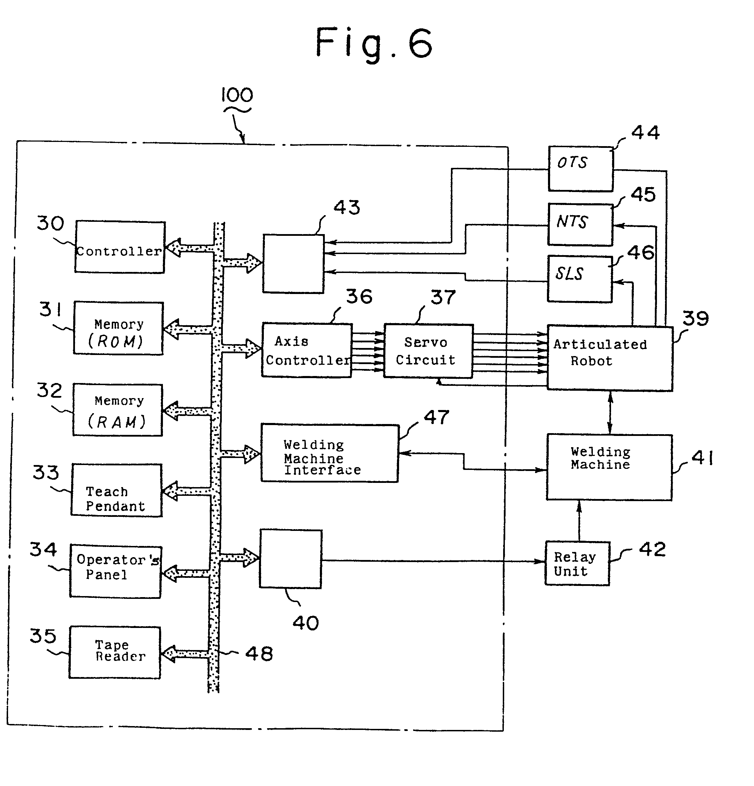

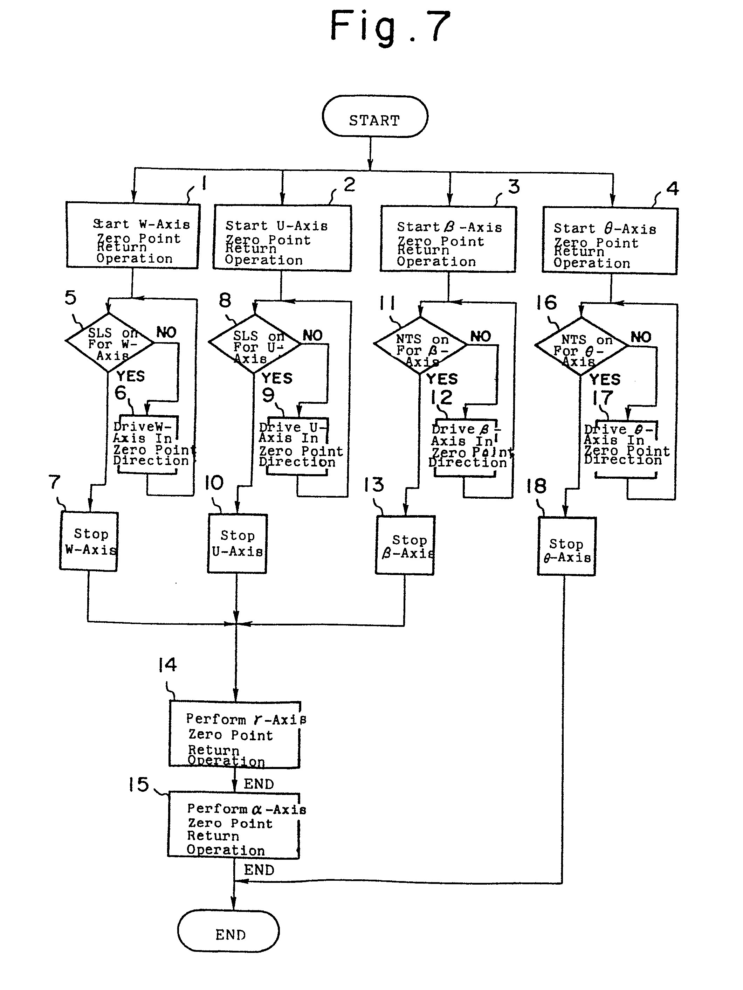

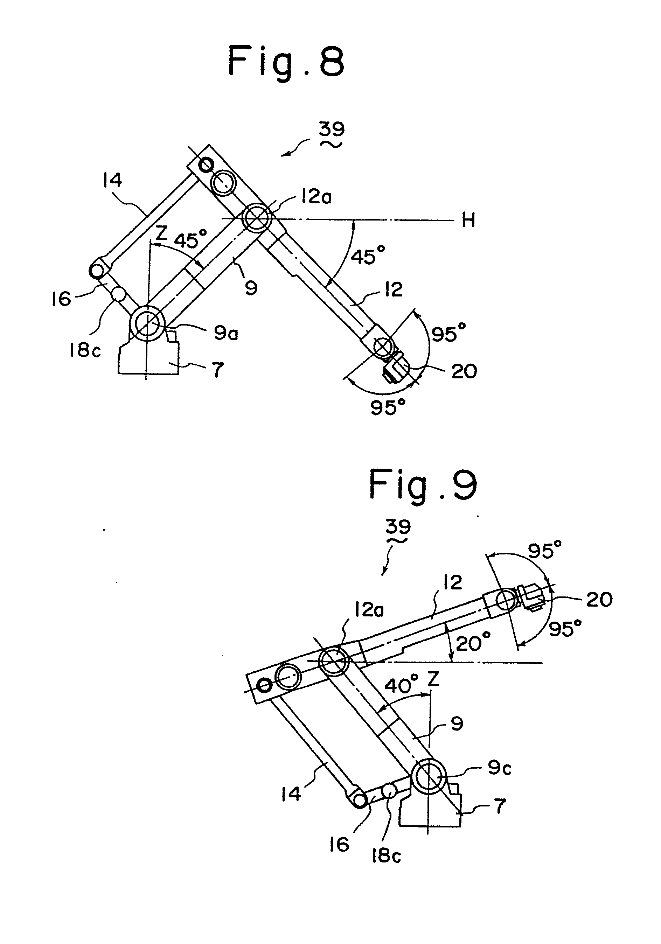

Fig. 1 is a perspective view of an articulated robot, Fig. 2 is a side view of the same, Fig. 3 is a front view of the same, Fig. 4 is a partially enlarged view showing a lower arm drive mechanism, Fig. 5 is a partially enlarged view showing an upper arm drive mechanism, Fig. 6 is a block diagram illustrating an embodiment in which an articulated robot is used as a welding robot, Fig. 7 is a flowchart for describing the motions for zero point return according to the present invention, and Figs. 8 and 9 are explanatory views for describing the motions of an articulated robot.

Best Mode for Carrying Out the Invention

The present invention will now be described in detail based on an embodiment shown in Figs. 6 through 9. Fig. 6 is a block diagram illustrating an embodiment in which an articulated robot is used as a welding robot. In the Figure, numeral 100 denotes a numerical control unit (NC unit) for controlling an articulated robot 39 and a welding machine 41. The NC unit 100 has a controller 30, a program memory 31, a data memory 32, a teach pendant 33, an operator's panel 34, a tape reader 35, an axis controller 36, a servo circuit 37, input/output circuits 40, 43, and an address/data bus interconnecting these components.

The controller 30 includes a central processor for executing numerical processing based on a control program. The program memory 31 is constituted by a read-only memory (ROM). The data memory 32, which stores various control programs such as a primary control program and a zero point return program to be executed by the controller 30, is constituted by a random-access memory (RAM) and stores the results of processing executed by the controller 30, teach data entered from the operator's panel 34, command data entered from the tape reader 35, and the like. The teach pendant 33 has a numerical display, lamps and buttons necessary for teaching the articulated robot. The operator's panel 34 has a CRT display unit and various keys such as numeric keys and function keys for externally applying various data to the NC unit. The axis controller 36 is for delivering a control signal to the servo circuit 37 on the basis of a robot control signal from the controller 30, and it includes an interpolator for controlling a plurality of axes. The servo circuit 37 controls the driving source of the articulated robot 39 on the basis of a control signal from the axis controller 36. The input/output circuit 40 acts through a relay unit 42 for performing an input and output of signals with the welding machine 41. The output circuit 40 delivers a welding control signal from the controller 30 to the relay unit 42 of the welding machine 41. The input circuit 43 provides the NC unit with signals from the overtravel switch OTS 44 and neutral switch NTS 45 provided for each axis of the articulated robot 39. A welding machine interface 47 is a line for interfacing the NC unit and the welding machine 41. Each axis of the articulated robot 39 has its position controlled by an incremental method.

The articuated robot zero point return operation will now be described.

To return the articulated robot 39 to the zero point, a power supply is turned on to automatically establish a zero point return state. As a result, the NC unit is placed in a zero point return mode and is put under the supervision of the zero point return program stored in tne memory 31. Next, when a start button on the operator's panel 34 is operated, the NC unit 100 starts the zero point return operation on the basis of the zero point return program. Fig. 7 is a flowchart for describing the zero point return operation. The zero point return operation will now be described with reference to Fig. 7.

When a start signal enters from the start button, the NC unit 100 performs a zero point return operation simultaneously for the W, U, $\theta$ and $\beta$ axes (steps 1 - 4). For the W axis, the NC unit 100 determines at a step 5 whether the stroke limit switch SLS at the zero point position of the W axis is on. Let us assume for example that the attitude of the articulated robot 39 prior to attainment of the zero point return mode is as shown in Fig. 8 (all axes are at positions other than zero). In other words, we will assume that the W axis 9 is tilted clockwise $45^\circ$ with respect to the Z axis, and that the U axis 12 is tilted clockwise $45^\circ$ with respect to a horizontal plane H. In this state, the stroke limit switch SLS at the position of the zero point will be off. At a step 6, therefore, the controller 30 sends a command to the axis controller 36, and the zero circuit 37 applies a motion command to the W-axis drive mechanism 11 of the articulated robot 39. As a result, the W-axis drive mechanism 11 is actuated and the W-axis arm 9 is rotated counter-clockwise (in the direction of the zero point) about the drive 9. During the zero point return operation, the interpolation operation by the axis controller is not carried out and all axes operate independently. As the W axis continues to rotate in the direction of the zero point, the W axis eventually reaches the zero-point position and the stroke limit switch SLS is turned on. When this occurs, there is a transition from step 5 to a step 7 and the NC unit 100 stops the W axis at the zero-point position. As shown in Fig. 9, the zero-point position of the W axis has an inclination of $40^\circ$ in the counter-clockwise direction with respect to the Z axis.

The operation shown at steps 8 through 10 for the U axis is similar to that for the W axis, so that the U axis is stopped at its zero-point position.

As for the $\beta$ axis, the NC unit 100 determines at a step 11 whether the wrist mechanism 20 is at the neutral position. When the wrist mechanism 20 is not at the neutral position, the $\beta$-axis servomotor 24 is driven to move the wrist mechanism 20 in the direction of the neutral position (the position shown in Figs. 8 and 9). When the wrist mechanism 20 reaches the neutral position and the neutral switch NTS 45 is turned on, the NC unit 100 shifts to a step 13 and stops the wrist mechanism 20 at the neutral position (zero point).

When the w, u and $\beta$ axes are thus returned to their zero-point positions, the NC unit 100 continues to perform the zero point return operations for the $\gamma$ and $\alpha$ axes (steps 14, 15). These zero point return operations are substantially the same as the operations indicated by steps 11 through 13.

The zero point return operation for the $\theta$ axis also is performed independently at steps 16 through 18. With the conclusion of the zero point return operation for this axis, the zero point return operation for all axes of the articulated robot 39 ends.

In the embodiment described above, four axes, namely the W axis, U axis, $\beta$ axis and $\theta$ axis, are returned to the zero point simultaneously. However, the other axes may also be returned to the zero point simultaneously, and two or three axes may be operated simultaneously. It is preferred that the zero point return operation be performed simultaneously at least for the U and W axes that operate the upper arm 12 and lower arm 9, for which the amount of motion is large.

In the foregoing, the present invention is described with respect to an embodiment in which the articulated robot is used as a welding robot. However, the present invention is not limited solely to a welding robot. It goes without saying that the invention can be applied to articulated robots used in other applications.

Industrial Applicability

According to the present invention as set forth above, returning an articulated robot to the zero point position at the start of operation can be performed rapidly and without causing overtravel. Accordingly, the invention is well-suited for application to articulated robots having a large operating range.

0172256

CLAIMS:

1. A zero point return system of an articulated robot having a plurality of axes of motion controlled by a numerical control unit, characterized in that said numerical control unit has at least a memory storing a program for zero point return and a controller for executing processing on the basis of said program and, in response to designation of a zero point return mode, renders the plural axes of motion of said articulated robot operable independently and drives at least two of said plural axes of motion in the zero point direction simultaneously, these axes of motion being driven in a zero point direction to return these axes of motion to a zero-point position.

2. A zero point return system of an articulated robot according to claim 1, characterized in that among said plural axes of motion, the axes returned to the zero point simultaneously are at least an axis of motion for operating an upper arm of the articulated robot, and an axis of motion for operating a lower arm of the articulated robot.

# Fig. 1

# Fig.2

# Fig.3

Fig.5

Fig.4

## Fig. 6

- 100
- 30 Controller
- 31 Memory (ROM)
- 32 Memory (RAM)
- 33 Teach Pendant
- 34 Operator's Panel
- 35 Tape Reader
- 36 Axis Controller
- 37 Servo Circuit
- 39 Articulated Robot
- 40
- 41 Welding Machine
- 42 Relay Unit
- 43
- 44 OTS
- 45 NTS
- 46 SLS
- 47 Welding Machine Interface
- 48

# Fig.7

# Fig.8

# Fig.9

# INTERNATIONAL SEARCH REPORT

International Application No. PCT/JP85/00068

| **I. CLASSIFICATION OF SUBJECT MATTER** (if several classification symbols apply, indicate all) [3] |
|---|

According to International Patent Classification (IPC) or to both National Classification and IPC

Int. Cl[4] B25J9/10, 9/16, 13/00, G05B19/18

| **II. FIELDS SEARCHED** |
|---|

### Minimum Documentation Searched [4]

| Classification System | Classification Symbols |
|---|---|
| IPC | B25J9/10-9/22, 13/00-13/08, G05B19/18-19/40 |

### Documentation Searched other than Minimum Documentation
to the Extent that such Documents are Included in the Fields Searched [5]

| | |
|---|---|
| Jitsuyo Shinan Koho | 1965-1984 |
| Kokai Jitsuyo Shinan Koho | 1971-1984 |

| **III. DOCUMENTS CONSIDERED TO BE RELEVANT** [14] | | |
|---|---|---|
| Category* | Citation of Document, [16] with indication, where appropriate, of the relevant passages [17] | Relevant to Claim No. [18] |
| Y | JP, A, 58-29578 (Mitsubishi Electric Corp.) 21 February 1983 (21. 02. 83) Page 2, upper right column, line 10 to lower left column, line 1 (Family nashi) | 1, 2 |
| Y | JP, A, 50-125186 (Kogyo Gijutsuin-cho) 1 October 1975 (01. 10. 75) Page 1, lower right column, lines 3 to 17 (Family nashi) | 1, 2 |
| Y | JP, U, 55-174609 (Hitachi Construction Machinery Co., Ltd.) 15 December 1980 (15. 12. 80) Fig. 6 (Family nashi) | 1, 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| **IV. CERTIFICATION** | |
|---|---|
| Date of the Actual Completion of the International Search [2] | Date of Mailing of this International Search Report [2] |
| May 15, 1985 (15. 05. 85) | May 27, 1985 (27. 05. 85) |
| International Searching Authority [1] | Signature of Authorized Officer [20] |
| Japanese Patent Office | |

Form PCT/ISA/210 (second sheet) (October 1981)